# EUROPÄISCHE PATENTSCHRIFT

(11) **EP 0 948 260 B1**
(45) Veröffentlichungstag und Bekanntmachung des Hinweises auf die Patenterteilung: **27.03.2002**
(21) Anmeldenummer: 97911955.9
(22) Anmeldetag: 19.11.1997
(51) Int. Cl.: A21C 9/08, A21C 11/02

(54) **VERFAHREN ZUM HERSTELLEN VON WAFFELSCHNITTEN**
METHOD FOR THE PRODUCTION OF HONEYCOMB SECTIONS
PROCEDE DE PRODUCTION DE SECTIONS EN NIDS D'ABEILLES

(30) Priorität: 20.11.1996 AT 68196
(43) Veröffentlichungstag der Anmeldung: 13.10.1999
(73) Patentinhaber: Josef Manner & Comp. AG, 1171 Wien (AT)
(72) Erfinder: MANNER, Josef sen, A-1171 Wien (AT)
(74) Vertreter: Haffner, Thomas M., Dr.
(86) Internationale Anmeldenummer: AT9700254
(87) Internationale Veröffentlichungsnummer: WO9821971

(56) Entgegenhaltungen:
- EP-A- 0 569 103
- FR-A- 2 521 400
- US-A- 3 106 280

## Beschreibung

Die Erfindung bezieht sich auf ein Verfahren zum Herstellen von Waffelschnitten aus mehrlagig bestrichenen Waffelplatten, bei welchem die Waffelplatten durch eine Mehrzahl einander kreuzender Schnitte in Schnitten unterteilt und zu Bahnen vereinzelt abtransportiert werden.

Bei der Herstellung von Waffelschnitten werden zunächst bestrichene Platten mit definierten Abmessungen hergestellt, wobei die Abmessungen dieser Platten durch die jeweils verwendeten Backplatten in einem Waffelofen vorgegeben sind. Die Waffelblätter werden in der Folge mit einer Füll- oder Streichmasse bestrichen, worauf eine Mehrzahl derartig bestrichener Waffelblätter übereinander gestapelt werden. Im Ergebnis wird eine mehrlagige, bestrichene Waffelplatte hergestellt, wobei in der Folge die bestrichene Platte zur Herstellung von Waffelschnitten zerteilt, abgefördert und verpackt wird. Bei der Herstellung üblicher Waffelschnitten mit im wesentlichen quaderförmiger Gestaltung und rechteckigem Grundriß wird in der Regel zunächst ein erster Schnitt parallel zur längeren Kante der mehrlagig bestrichenen Waffelplatten vorgenommen, worauf in der Folge orthogonal zu diesem ersten Schnitt geführte Schnitte zur Ausbildung der einzelnen Waffelschnitten durchgeführt werden. Da der erste Schnitt durch im wesentlichen parallel zueinander verlaufende, geradlinige Schnitte entsteht, kann unmittelbar nach der Durchführung des zweiten Schnittes ein Abtransport von Reihen parallel zu den ersten Schnitten erfolgen, sodaß einzelne Reihen hintereinander auf einen parallel zu der ersten Schnittlinie verlaufenden Förderer abgeschoben werden können. Diese Vereinzelung zu Reihen bietet die Möglichkeit, in rascher Abfolge eine entsprechende Anzahl von Schnitten einer Verpackungseinrichtung zuzuführen, sodaß mit überaus kurzen Taktzeiten eine rasche, im wesentlichen kontinuierliche Abförderung und Verpackung erfolgen kann. Mit derartigen bekannten Verfahren gelingt es allerdings nicht, polygonale Waffelschnitten herzustellen, da in diesen Fällen der Abtransport einer Reihe nur dann gelingt, wenn nicht nur diese Reihe sondern auch die einzelnen Stücke zuvor vereinzelt und von der benachbarten Reihe getrennt auf die Abfördereinrichtung gelangen können. Andernfalls würden die ineinander vorspringenden Teilbereiche derartiger polygonaler Schnitten eine kontinuierliche Abförderung behindern. Dies hätte wiederum zur Folge, daß mit einem Vergrößern der Taktzeit die Gesamtproduktivität einer automatisch gesteuerten Abförder- und Verpackungsanlage wesentlich verringert wird. Dreieckige Schnitten können mit Schneidwerkzeugen nur bei aufwendiger Manipulation der Platten oder der Schneidwerkzeuge hergestellt werden, da die Schnitte nicht orthogonal zueinander geführt werden können, wodurch sich eine längere Taktzeit ergibt.

Die Erfindung zielt nun darauf ab, ein Verfahren der eingangs genannten Art zu schaffen, mit welchem auch Waffelschnitten hergestellt werden können, welche bei einer notwendigen Verschiebung nicht ohne gegenseitige Behinderung oder gar nicht in einzelne Reihen vereinzelt werden können. Zur Lösung dieser Aufgabe besteht das erfindungsgemäße Verfahren im wesentlichen darin, daß die Waffelplatte mit einem Stanzwerkzeug aufgeteilt wird, daß die Schnittkanten unter einem Winkel ungleich 90° aneinander anschließen oder gekrümmt verlaufen, daß eine Mehrzahl von zueinander parallelen Reihen von Schnitten ausgestanzt wird, daß das Stanzwerkzeug in eine Position über wenigstens eine Abfördereinrichtung verfahren wird und daß die gestanzten Reihen einzeln oder in Gruppen ausgestoßen und abtransportiert werden. Dadurch, daß anstelle der kontinuierlichen Längs- und Querschnitte nun Stanzwerkzeuge verwendet werden, gelingt es, beliebige Winkel und beliebige geometrische Figuren mit überaus kurzen Taktzeiten aus einer mehrlagig bestrichenen (Waffel)Platte auszustanzen. Durch das Ausstoßen der Schnitten aus den Stanzwerkzeugen können die Schnitten reihenweise auf den Abförderer oder auf eine Unterlage gebracht werden. Die Abförderung der einzelnen Reihen der auf diese Weise aus den Stanzwerkzeugen auf die Unterlage ausgestoßenen Waffeischnitten kann wiederum mit sehr kurzer Taktzeit und damit mit hoher Geschwindigkeit erfolgen, wobei die Reihen in der gewünschten Weise einer vollautomatischen Verpackungseinrichtung zugeführt werden können.

Mit Vorteil wird das erfindungsgemäße Verfahren hierbei so durchgeführt, daß gleichzeitig mit einer auf die Abfördereinrichtung ausgestoßenen Reihe eine weitere Reihe parallel zur Abfördereinrichtung auf eine Unterlage ausgestoßen und nach dem Abtransport der auf die Abfördereinrichtung ausgestoßenen Reihe auf die Abfördereinrichtung verschoben wird, wobei vorzugsweise nach dem Ausstoßen von zueinander parallelen Reihen das Stanzwerkzeug in eine Position verschoben wird, in welcher ggf. nach dem Verschieben der im ersten Takt ausgestoßenen weiteren Reihe auf die Abfördereinrichtung eine zusätzliche Reihe auf die Abfördereinrichtung ausgestoßen wird. Auf diese Weise lassen sich kurze Taktzeiten und eine hohe Produktivität erzielen. In besonders einfacher Weise gelingt dies, wenn eine gerade Anzahl von Reihen ausgestanzt wird und jeweils die ungeradzahligen Reihen gesondert von den geradzahligen Reihen ausgestoßen und in der Ebene zur Abfördereinrichtung getaktet verschoben werden, wodurch sichergestellt wird, daß hintereinander immer eine Reihe unmittelbar auf den Förderer ausgestoßen wird und eine gleichzeitig auf die Unterlage abgestoßene Reihe während der Verschiebung des Stanzwerkzeuges in seine neue Position zum Förderer verschoben wird, sodaß ein kontinuierlicher Betrieb erreicht wird.

In besonders vorteilhafter Weise wird das erfindungsgemäße Verfahren so durchgeführt, daß bei einem Ausstanzen von vier Reihen die erste und dritte Reihe ausgestoßen werden, wobei die erste Reihe direkt in den Abförderer ausgestoßen wird, worauf anschließend nach dem Abtransport dieser ersten Reihe die dritte Reihe in den Abförderer verschoben wird, worauf nach dem Verschieben des Stanzwerkzeuges die zweite und die vierte Reihe aus dem Stanzwerkzeug ausgestoßen wird, wobei die zweite Reihe direkt in den Abförderer ausgestoßen wird, worauf die vierte Reihe in den Abförderer geschoben wird, wodurch überaus kurze Taktzeiten erreicht werden und eine überaus hohe Produktivität erzielt wird.

Durch die Verwendung von Stanzen gelingt es, beliebig geformte Waffelschnitten auch mit unterschiedlichen Größen, und insbesondere dreieckförmige, runde oder sechseckförmige Schnitten auszustanzen. Mit Vorteil wird die Geometrie der auszustanzenden Schnitten jedoch immer so gewählt, daß der Verschnitt und der Abfall minimiert werden. Dies gelingt besonders einfach dann, wenn, wie es einer besonders bevorzugten Weiterbildung der Erfindung entspricht, Dreiecke und/oder regelmäßige Sechsecke in Reihen oder Gruppen ausgestanzt werden. Auch im Falle des Ausstanzens von kreisförmigen Waffelschnitten kann mit einer Stanzform ein getaktetes Stanzen vorgenommen werden, wodurch der Verschnitt minimiert wird und benachbarte Kanten der Stanzwerkzeuge praktisch überlappend stanzen können.

Im Falle des Ausstanzens von Dreiecken können die ausgestanzten Waffelschnitten in einen einheitlichen Vorgang ausgestoßen werden, da die Reihen dann, wenn, wie es einer bevorzugten Weiterbildung des erfindungsgemäßen Verfahrens entspricht, für das Ausstanzen von Dreiecken je zwei zueinander entgegengesetzt weisende Dreieckspitzen aufweisende Dreiecke zu einer Reihe mit zueinander parallelen Seitenkanten zusammengefaßt werden, ein Längsverschieben der Reihen längs der zueinander parallelen Seitenkanten in einer Ebene erfolgen kann. Demgegenüber lassen sich beispielsweise regelmäßige Sechsecke nicht so konfigurieren, daß die Längsverschiebung einer Reihe ohne Beeinträchtigung durch eine benachbarte Reihe möglich wird.

Um die Produktivität beim Ausstanzen von runden Waffelschnitten zu erhöhen, kann mit Vorteil so verfahren werden, daß nach dem Ausstanzen von kreisförmigen Waffelschnitten eine Mehrzahl von zueinander parallelen Reihen auf eine Mehrzahl von zueinander parallelen Förderern ausgestoßen wird.

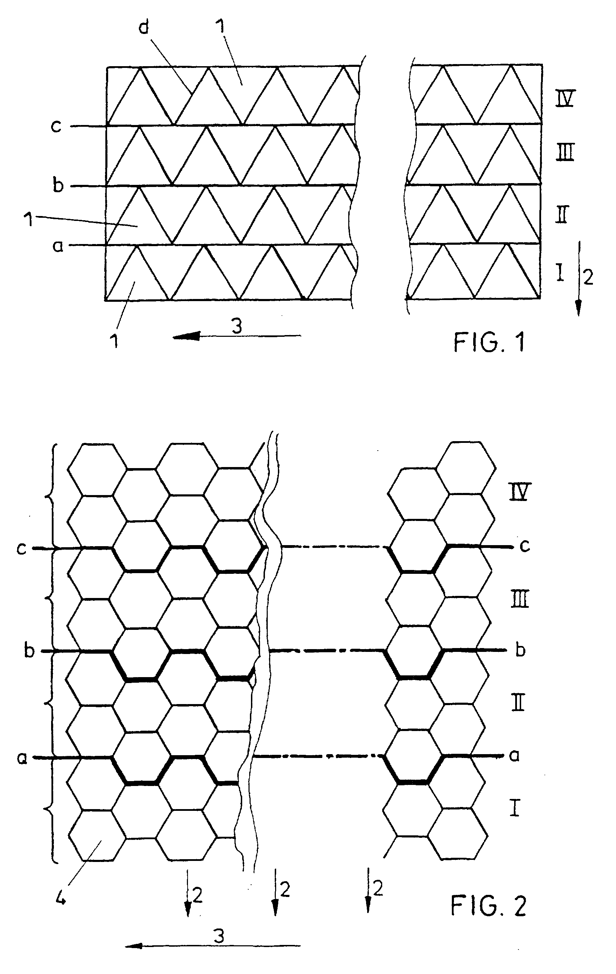

Die Erfindung wird nachfolgend anhand von in den Zeichnungen schematisch dargestellten Stanzmustern näher erläutert. In dieser zeigen Fig.1 ein Stanzmuster für dreieckförmige Tortenecken bzw. Waffelschnitten und Fig. 2 ein Stanzmuster für sechseckige Tortenecken bzw. Schnitten.

In Fig.1 sind vier Reihen I, II, III und IV von nebeneinander liegenden und mit ihren Spitzen jeweils gegeneinander weisenden, dreieckförmigen Tortenecken 1 dargestellt. Die Trennlinien zwischen den Reihen I bis IV sind hierbei mit a, b und c bezeichnet. Diese Trennlinien a, b und c werden gemeinsam mit den Konturen d für die dreieckförmigen Tortenecken gestanzt, worauf die gestanzten Teile entweder gleichzeitig oder in zeitlicher Abfolge aus der Stanzform ausgestoßen werden. Die Reihen können hierbei im Falle von dreieckförmigen Schnitten 1, wie dies in Fig.1 dargestellt ist, in Gruppen ausgebracht werden und in Richtung des Pfeiles 2 verschoben werden. Sobald die erste Reihe I vom in die Richtung des Pfeiles 3 abfördernden Abförderer erfaßt und abtransportiert wurde, kann die Reihe III seitlich auf den Abförderer verschoben werden. Es werden jeweils die Reihen I und III gemeinsam, und die Reihen II und IV gemeinsam ausgestoßen, sodaß eine sichere Trennung längs der Trennlinien a, b und c erzielt werden kann.

Abweichend von den einfachen Verhältnissen, wie sie bei dreieckförmigen Tortenecken vorliegen, ist in Fig.2 ein Stanzmuster für sechseckige Schnitten 4 ersichtlich. Auch hier erfolgt eine Unterteilung des Stanzmusters in Reihen I, II, III und IV, wobei unmittelbar erkenntlich ist, daß bei einem Verschieben der ausgestanzten und ausgeworfenen sechseckigen Schnitten 4 in Richtung des Pfeiles 2 zur Abfördereinrichtung eine Verschiebung der Reihe I zur Reihe II längs der Schnittlinie a nicht möglich ist, da die Schnittlinie a nicht geradlinig verläuft. Im Falle von sechseckigen Schnitten 4 müssen die einzelnen Reihen I bis IV gesondert oder alternierend ausgestoßen werden, um als Reihe vereinzelt in Richtung des Pfeiles 3 vom Abförderer abgefördert werden zu können. Mit Vorteil erfolgt dies so, daß die Reihe I und die Reihe III in einem ersten Takt ausgestoßen werden, wobei die Reihe I unmittelbar auf den Abförderer ausgestoßen wird und die Reihe III in Richtung der Pfeile 2 auf den Abförderer geschoben wird, worauf die Reihen II und IV ausgestoßen werden, wobei die Reihe II nach einer seitlichen Verschiebung des Stanzwerkzeuges wiederum unmittelbar auf den Abförderer ausgestoßen und die Reihe IV auf den Abförderer geschoben wird, sodaß ein kontinuierliches Band von sechseckförmigen Schnitten in Richtung des Pfeiles 3 abgefördert wird.

## Patentansprüche

1. Verfahren zum Herstellen von Waffelschnitten aus mehrlagig bestrichenen Waffelplatten, bei welchem die Waffelplatten durch eine Mehrzahl einander kreuzender Schnitte in Schnitten unterteilt und zu Bahnen vereinzelt abtransportiert werden, **dadurch gekennzeichnet, daß** die Waffelplatte mit einem Stanzwerkzeug aufgeteilt wird, daß die Schnittkanten unter einem Winkel ungleich 90° aneinander anschließen oder gekrümmt verlaufen, daß eine Mehrzahl von zueinander parallelen Reihen (I,II,III,IV) von Schnitten (1, 4) ausgestanzt wird, daß das Stanzwerkzeug in eine Position über wenigstens eine Abfördereinrichtung verfahren wird und daß die gestanzten Reihen einzeln oder in Gruppen ausgestoßen und abtransportiert werden.

2. Verfahren nach Anspruch 1, **dadurch gekennzeichnet, daß** gleichzeitig mit einer auf die Abfördereinrichtung ausgestoßenen Reihe (I,II) eine weitere Reihe (III, IV) parallel zur Abfördereinrichtung auf eine Unterlage ausgestoßen und nach dem Abtransport der auf die Abfördereinrichtung ausgestoßenen Reihe (I,II) auf die Abfördereinrichtung verschoben wird.

3. Verfahren nach Anspruch 1 oder 2, dadurch gekennzeich net, daß nach dem Ausstoßen von zueinander parallelen Reihen (I) das Stanzwerkzeug in eine Position verschoben wird, in welcher ggf. nach dem Verschieben der im ersten Takt ausgestoßenen weiteren Reihe (III) auf die Abfördereinrichtung eine zusätzliche Reihe (II) auf die Abfördereinrichtung ausgestoßen wird.

4. Verfahren nach Anspruch 1, 2 oder 3, **dadurch gekennzeichnet, daß** eine gerade Anzahl von Reihen ausgestanzt wird und jeweils die ungeradzahligen Reihen (I,III) gesondert von den geradzahligen Reihen (II,IV) ausgestoßen und in der Ebene zur Abfördereinrichtung getaktet verschoben werden.

5. Verfahren nach einem der Ansprüche 1 bis 4, **dadurch gekennzeichnet, daß** bei einem Ausstanzen von vier Reihen die erste und dritte Reihe (I,III) ausgestoßen werden, wobei die erste Reihe (I) direkt in den Abförderer ausgestoßen wird, worauf anschließend nach dem Abtransport dieser ersten Reihe (I) die dritte Reihe (III) in den Abförderer geschoben wird, worauf nach dem Verschieben des Stanzwerkzeuges die zweite und die vierte Reihe (II,IV) aus dem Stanzwerkzeug ausgestoßen wird, wobei die zweite Reihe (II) direkt in den Abförderer ausgestoßen wird, worauf die vierte Reihe (IV) in den Abförderer geschoben wird.

6. Verfahren nach einem der Ansprüche 1 bis 5, **dadurch gekennzeichnet, daß** Dreiecke (1) und/oder regelmäßige Sechsecke (4) in Reihen (I,II,III,IV) oder Gruppen ausgestanzt werden.

7. Verfahren nach einem der Ansprüche 1 bis 6, **dadurch gekennzeichnet, daß** für das Ausstanzen von Dreiecken (1) je zwei zueinander entgegengesetzt weisende Dreieckspitzen aufweisende Dreiecke (1) zu einer Reihe mit zueinander parallelen Seitenkanten zusammengefaßt werden.

8. Verfahren nach einem der Ansprüche 1 bis 7, **dadurch gekennzeichnet, daß** nach dem Ausstanzen von kreisförmigen Waffelschnitten eine Mehrzahl von zueinander parallelen Reihen auf eine Mehrzahl von zueinander parallelen Förderern ausgestoßen wird.

## Claims

1. A method for producing filled wafers from wafer plates coated in several layers, in which the wafer plates are subdivided into filled wafers by a plurality of mutually crossing cuts and transported off upon separation into webs, **characterized in that** the wafer plate is divided by the aid of a punching tool, that the cutting edges border on one another at angles different from 90°, or extend in a curved manner, that a plurality of parallel rows (I, II, III, IV) of filled wafers (1, 4) are punched out, that the punching tool is moved into a position above at least one delivery means, and that the punched rows are ejected, and transported off, either individually or in groups.

2. A method according to claim 1, **characterized in that**, simultaneously with a row (I, II) ejected onto the delivery means, a further row (III, IV) is ejected onto a support in parallel with the delivery means and, after the row (I, II) ejected onto the delivery means has been transported off, is displaced onto the delivery means.

3. A method according to claim 1 or 2, **characterized in that**, after the ejection of parallel rows (I), the punching tool is displaced into a position in which an additional row (II) is ejected onto the delivery means, optionally upon displacement of the further row (III) ejected onto the delivery means in the first cycle.

4. A method according to claim 1, 2 or 3, **characterized in that** an even number of rows is punched out and the respective odd-numbered row (I, III) is each ejected separate from the even-numbered rows (II, IV) and displaced in the plane to the delivery means in cycles.

5. A method according to any one of claims 1 to 4, **characterized in that**, when punching out four rows, the first and third rows (I, III) are ejected, wherein the first row (I) is ejected directly into the delivery means, whereupon the third row (III) is pushed into the delivery means after said first row (I) has been transported off, whereupon the second and fourth rows (II, IV) are ejected from the punching tool after the displacement of the punching tool, whereby the second row (II) is ejected directly into the delivery means, whereupon the fourth row (IV) is pushed into the delivery means.

6. A method according to any one of claims 1 to 5, **characterized in that** triangles (1) and/or regular hexagons (4) are punched out in rows (I, II, III, IV) or groups.

7. A method according to any one of claims 1 to 6, **characterized in that**, for the punching out of triangles (1), two triangles (1) comprising oppositely oriented triangle vertices are each combined to a row having parallel side edges.

8. A method according to any one of claims 1 to 7, **characterized in that** a plurality of parallel rows are ejected onto a plurality of parallel conveying means after the punching out of circularly shaped filled wafers.

## Revendications

1. Procédé de production de gaufrettes fourrées à partir de plaques de gaufrette tartinées en plusieurs couches, dans lequel les plaques de gaufrette sont subdivisées en gaufrettes fourrées par une pluralité de coups se croisant les uns les autres, et sont transportées après avoir été individualisées en rangées, **caractérisé en ce que** la plaque de gaufrette est divisée au moyen d'un outil de poinçonnage, que les bords de coupes s'adjoignent sous un angle qui diffère de 90° ou s'étendent d'une manière courbée, qu'une pluralité de rangées parallèles (I, II, III, IV) de gaufrettes fourrées (1, 4) sont poinçonnées, que l'outil de poinçonnage est déplacé dans une position au dessus d'au moins un moyen d'enlèvement et **en ce que** les rangées poinçonnées sont éjectées et transportées individuellement ou par groupes.

2. Procédé selon la revendication 1, **caractérisé en ce que**, simultanément avec une rangée (I, II) éjectée sur le moyen d'enlèvement, une autre rangée (III, IV) est éjectée sur un support parallèlement au moyen d'enlèvement et est déplacée sur le moyen d'enlèvement après le transport de la rangée (I, II) éjectée sur ledit moyen d'enlèvement.

3. Procédé selon la revendication 1 ou 2, **caractérisé en ce que** l'outil de poinçonnage, après l'éjection de rangées parallèles (I), est déplacé dans une position dans laquelle une rangée additionelle (II) est éjectée sur le moyen d'enlèvement, le cas écheant, après le déplacement de la rangée additionelle (III) éjectée au premier cycle.

4. Procédé selon la revendication 1, 2 ou 3, **caractérisé en ce qu'**un nombre pair de rangées est poinçonné et les rangées en nombre impair (I, III) sont éjectées séparement des rangées en nombre pair (II, IV) et sont déplacées en cycles dans le plan vers le moyen d'enlèvement.

5. Procédé selon l'une quelconque des revendications 1 à 4, **caractérisé en ce que**, en cas d'un poinçonnage de quatre rangées, la première et la troisième rangée (I, III) sont éjectées, cependant que la première rangée (I) est éjectée directement dans le moyen d'enlèvement, après quoi la troisième rangée (III) est poussée dans le moyen d'enlèvement suivant le transport de ladite première rangée (I), après quoi la deuxième et la quatrième rangées (II, IV) sont éjectées de l'outil de poinçonnage après le déplacement dudit outil de poinçonnage, cependant que la deuxième rangée (II) est éjectée directement dans le moyen d'enlèvement, après quoi la quatrième rangée (IV) est poussée dans le moyen d'enlèvement.

6. Procédé selon l'une quelconque des revendications 1 à 5, **caractérisé en ce que** des triangles (1) et/ou des hexagones reguliers (4) sont poinçonnés par rangées (I, II, III, IV) ou par groupes.

7. Procédé selon l'une quelconque des revendications 1 à 6, **caractérisé en ce que**, en vue d'un poinçonnage de triangles (1), deux triangles (1) comprenant des sommets de triangle montrant à contresens sont respectivement combinés en une rangée ayant des arêtes latérales parallèles.

8. Procédé selon l'une quelconque des revendications 1 à 7, **caractérisé en ce qu'**une pluralité de rangées parallèles sont éjectées sur une pluralité de convoyeurs en parallèle après le poinçonnage de gaufrettes fourrées en forme circulaire.
